# EUROPEAN PATENT APPLICATION

(11) **EP 1 178 352 A1**
(43) Date of publication of application: **06.02.2002**
(21) Application number: 01120291.8
(22) Date of filing: 16.06.1997
(51) Int. Cl.: G03B 37/00, G02B 13/06, H04N 7/18, H04N 5/262, G06T 3/00

(54) **Method of and apparatus for presenting panoramic images at a local receiver, and a corresponding computer program**

(30) Priority: 24.06.1996 US 20292; 11.06.1997 US 872525
(62) Divisional of application: 97929734.8
(71) Applicant: Behere Corporation, Los Gatos, CA 95030 (US)
(72) Inventor: Driscoll, Edward, Jr., Portola Valley, California 94028 (US); Morrow, Howard, San Jose, California 95120 (US); Steinhauer, Alan J., Sunnyvale, California 94087 (US); Lomax, Willard Curtis, Sunnyvale, California 94087 (US)
(74) Representative: Wombwell, Francis

(57) **Abstract**

The invention is a new panoramic camera apparatus that instantaneously captures a 360 degree panoramic image. In one of the embodiments, the camera device comprises a convex mirror (210) for capturing light of the surrounding panorama, an astigmatic lens for correcting astigmatism, a camera objective lens (230) for converging light to a single point, a field flattening lens (240) for converting polar format images into two-dimensional planar images, and an image capture mechanism (250) for capturing optimized two-dimensional annular image of the surrounding panorama. The panoramic camera apparatus further includes various different systems for displaying and distributing the panoramic images. Specifically, these systems include means and method steps for digitally performing geometric transformation of the two-dimensional annular image into rectangular projections such that the panoramic image can be displayed using conventional methods such as printed images and televised images.

## Description

### FIELD OF THE INVENTION

The present invention relates to the field of film and video photography. In particular the present invention discloses a camera device that captures a 360 degree panoramic image and display systems for displaying the panoramic image captured by the camera device.

### BACKGROUND OF THE INVENTION

Most cameras only provide a small viewing angle. Thus, a typical conventional camera only captures an image in the direction that the camera is aimed. Limited view cameras force viewers to look only at what the camera operator chooses to focus on. Some cameras use a specialized wide angle lens to capture a wider panoramic image, but such panoramic cameras still have a limited field of view.

It would be desirable to have a camera system that would capture the light from all directions such that a full 360 degree panoramic image can be created. A full 360 degree panoramic image would allow the viewer to choose what she would like to look at. Furthermore, a full 360 degree panoramic image allows multiple viewers to simultaneously view the world from the same point, with each being able to independently choose their viewing direction and field of view.

At the present time, there are some known methods of creating 360 degree panoramic images. However, most current methods are subject to limitations due to their physical movements and mechanical complexity. For example, some of the current methods operate by combining a series of individual photographs taken in different directions into a single panoramic image. Some panoramic cameras spin a lens and film to capture a panoramic view in a single sweeping motion.

There is a market for panoramic photos to be used in multimedia applications, typically provided on CD-ROMs. In the last few years, some software manufacturers have introduced standards for digital storage and computer playback of panoramic datasets. One example is QuickTime® VR, introduced by Apple® Computer, Inc. Apple® Computer's QuickTime® VR standard governs the file storage format and the playback software needed to view their datasets.

Currently, Apple Computer recommends and provides software tools to implement a labor-intensive process for capturing these panoramic datasets. In the Apple QuickTime® VR (QTVR) process a standard 35mm camera is mounted vertically on a leveled tripod and equipped with an extreme wide angle lens (e.g. 15-18mm focal length). A sequence of twelve or more overlapping still photographs is taken at roughly 30 degree intervals as the camera is turned on the tripod around a vertical axis. These photographs are developed, digitized and then fed into a semi-automated software program called a "stitcher" that merges the overlapping still photographs into one long panoramic strip.

The labor intensive process suffers from a number of shortcomings. First, the process is time-consuming since many steps requiring human intervention and guidance. Furthermore, the recommended process is prone to temporal artifacts since it captures each individual photo at a different time. This means that the "stitched" pan image is not instantaneous but rather is made up of individual photos taken at different times. The time change during the series of photographs makes it nearly impossible to create panoramic images in changing scenes containing shorelines, urban crowds and traffic, windblown trees, etc. Finally, it is difficult to see how the image capture method recommended by Apple QuickTime® VR (QTVR) can be extended from a single still panoramic image into a continuous frame, or motion picture panoramic image capture.

### SUMMARY OF THE INVENTION

According to the present invention there is provided a method of presenting panoramic images comprising steps of:
selecting, at a local receiver, a viewing angle into a stream of digitized panoramic frames, said stream comprising a plurality of digitized panoramic frames;
transforming a selected portion of one or more of said plurality of digitized panoramic frames to generate a stream of planar projection frames, said selected portion responsive to said viewing angle; and
displaying said stream of planar projection frames at said local receiver.

Also according to the present invention there is provided an apparatus for presenting panoramic images comprising:
a receiver means for receiving a stream of digitized panoramic frames, said stream comprising a plurality of digitized panoramic frames;
a selection means for selecting a viewing angle into said stream of digitized panoramic frames received by the receiver means;
a transformation means for transforming a selected portion of one or more of said plurality of digitized panoramic frames to generate a stream of planar projection frames, said selected portion responsive to said viewing angle selected by the selection means; and
a display means for displaying said stream of planar projection frames transformed by the transformation means:

Further according to the present invention there is provided an apparatus for presenting panoramic images comprising:
a receiver mechanism configured to receive a stream of digitized panoramic frames, said stream including a plurality of digitized panoramic frames;
a selection mechanism configured to select a viewing angle into said stream of digitized panoramic frames;
a transformation mechanism configured to transform a selected portion of one or more of said plurality of digitized panoramic frames to generate a stream of planar projection frames, said selected portion responsive to said viewing angle selected by the selection mechanism; and
a display mechanism configured to display said stream of planar projection frames transformed by the transformation mechanism.

Also further according to the present invention there is provided a program product comprising:
a computer usable data carrier having computer readable code embodied therein for causing a computer to present a panoramic images, said computer readable code comprising:
computer readable program code configured to cause said computer to effect a receiver means for receiving a stream of digitized panoramic frames, said stream comprising a plurality of digitized panoramic frames;
computer readable program code configured to cause said computer to effect a selection means for selecting a viewing angle into said stream of digitized panoramic frames received by the receiver means;
computer readable program code configured to cause said computer to effect a transformation means for transforming a selected portion of one or more of said plurality of digitized panoramic frames to generate a stream of planar projection frames, said selected portion responsive to said viewing angle selected by the selection means; and
computer readable program code configured to cause said computer to effect a display means for displaying said stream of planar projection frames transformed by the transformation means.

Other objects, features and advantages of present invention will be apparent from the company drawings and from the following detailed description that follow below.

### BRIEF DESCRIPTION OF THE DRAWINGS

The objects, features and advantages of the present invention will be apparent to one skilled in the art, in view of the following detailed description in which:
**Figure 1** illustrates the panoramic surroundings that are captured by the panoramic camera system of the present invention.
**Figure 2a** illustrates a schematic diagram of the panoramic camera system of the present invention.
**Figure 2b** illustrates a schematic diagram of the panoramic camera system of the present invention with a parabolic mirror.
**Figure 2c** illustrates an annular image captured by the panoramic camera system of the Figure 2b wherein the incident angle is linearly proportional to the radial distance of the annular image .
**Figure 3a** illustrates an example of an annular image captured by the panoramic camera system of the present invention.
**Figure 3b** illustrates a rectangular panoramic image after the captured annular image is transformed from polar coordinates to rectangular coordinates.
**Figure 4a** illustrates photographic film used to capture the annular panoramic image.
**Figure 4b** illustrates a Charged Coupled Device array used to capture the annular panoramic image.
**Figure 5** illustrates an alternate embodiment of the camera system of the present invention wherein a beam splitter is used to allow the annular image to be captured on two image planes.
**Figure 6a** illustrates a first embodiment of two image planes used to capture different portions of a single annular panoramic image.
**Figure 6b** illustrates a second embodiment of two image planes used to capture different portions of a single annular panoramic image.
**Figure 7** illustrates an embodiment of the panoramic camera wherein some of the optical elements are housed within the parabolic mirror.
**Figure 8a** illustrates a first embodiment of the panoramic camera that uses a solid transparent block to surround the parabolic mirror.
**Figure 8b** illustrates a second embodiment that uses a solid transparent block to surround the parabolic mirror which houses other optical elements.
**Figure 9a** illustrates an embodiment that panoramic camera that supports the convex mirror with a central post that is out of the annular field of view.
**Figure 9b** illustrates an embodiment that panoramic camera that divides the convex mirror in quarters and supports the mirror using posts between the four quarters.
**Figure 10** graphically illustrates how the annular image is sample to product a rectangular panoramic image.
**Figure 11a** graphically illustrates how an image is stored in Apple® Computer's QuickTime® VR format.
**Figure 11b** graphically illustrates how viewports are created from Apple® Computer's QuickTime® VR format.
**Figure 11c** illustrates a flow chart that lists how the panoramic camera system can be used to create images in Apple® Computer's QuickTime® VR format.
**Figure 12** illustrates a graphical user interface for a client program used to view panoramic still images created by the panoramic camera system.
**Figure 13a** illustrates a graphical user interface for a client program used to view panoramic video created by the panoramic camera system.
**Figure 13b** illustrates a networked computer arrangement used to view panoramic video created by the panoramic camera system.
**Figure 14a** illustrates a side view of one embodiment of the panoramic camera system that includes microphones.
**Figure 14b** illustrates a side view of one embodiment of the panoramic camera system that includes microphones.

### DETAILED DESCRIPTION OF THE PREFERRED EMBODIMENT

A method and apparatus for a camera device that instantaneously captures 360 degree panoramic images is disclosed. In the following description, for purposes of explanation, specific nomenclature is set forth to provide a thorough understanding of the present invention. However, it will be apparent to one skilled in the art that these specific details are not required in order to practice the present invention. For example, the present invention has been described with reference to Charge Coupled Devices. However, the panoramic camera system can easily be implemented with other types of electronic image capture systems.

### The Basic Panoramic Camera Design

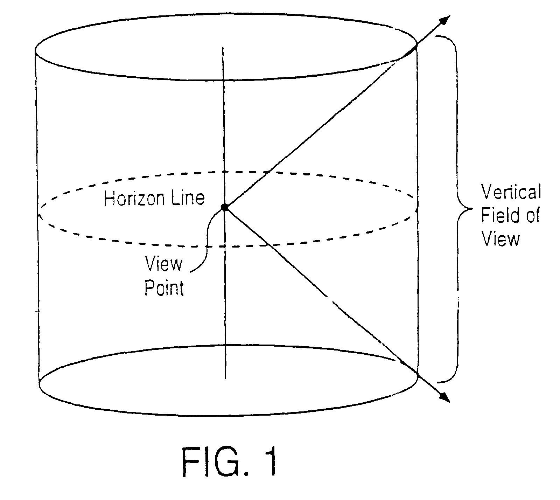

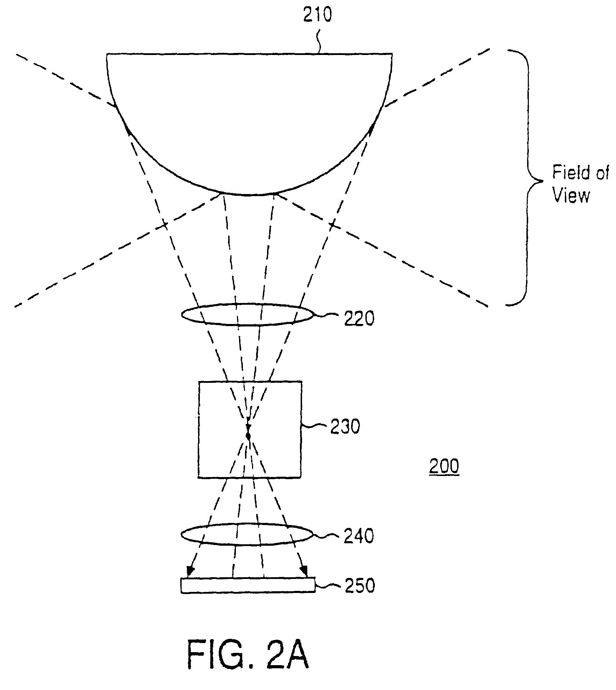

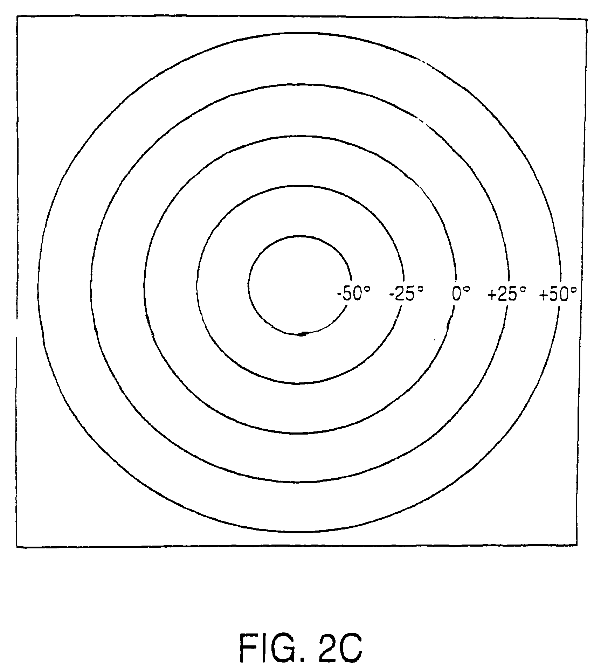

The panoramic camera design of the present invention captures light from all directions within 50 to 60 degrees above and below the horizon simultaneously. **Figure 1** graphically illustrates the cylindrical panoramic view of which the panoramic camera system captures an image. To capture all the light of the panorama and generate a two dimensional representation that may easily be recorded, the present invention uses a carefully designed and engineered collection of mirrors and lenses. The basic design of the panoramic camera of the present invention is illustrated in **Figure 2a.** Each element of the panoramic camera will be described individually.

### The Mirror

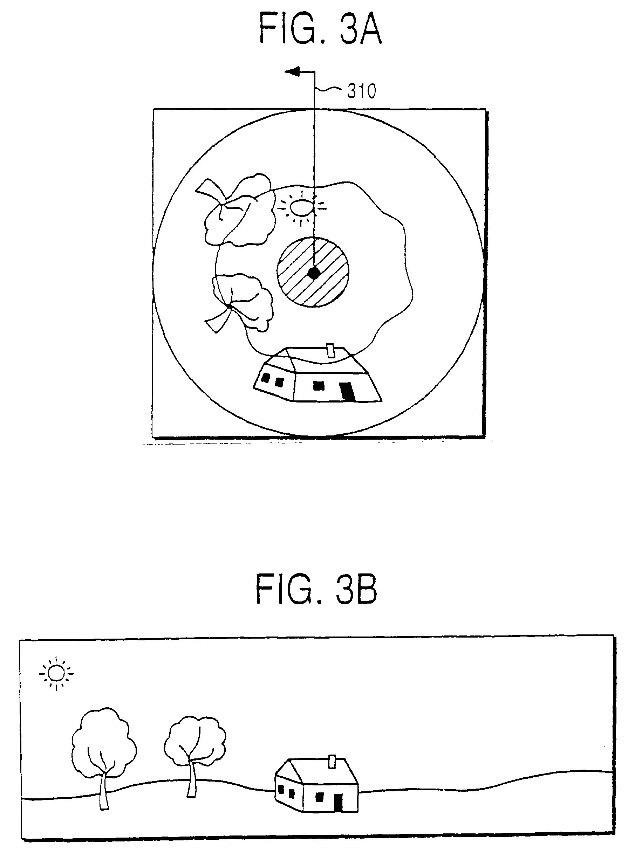

Referring to **Figure 2a,** the panoramic camera of the present invention collects light using a convex mirror **210** that is in the approximate shape of parabolic cone. In one embodiment of the present invention, the tip of the convex mirror **210** is pointed downward as illustrated in **Figure 2a.** When the convex mirror **210** is viewed from below, the parabolic mirror **210** presents an annular image of the surrounding panorama as illustrated in **Figure 3a.** However, the annular image is distorted and suffers from optical defects due to the shape of the convex mirror **210.**

The distortion in the image is partly due to the fact that the convex mirror **210** of the imaging system effectively converts the surrounding panorama to a polar coordinate system. By adjusting the shape of the convex mirror **210,** the mapping of the elevation angle of incoming light to radial distance in the annular image, can be controlled.

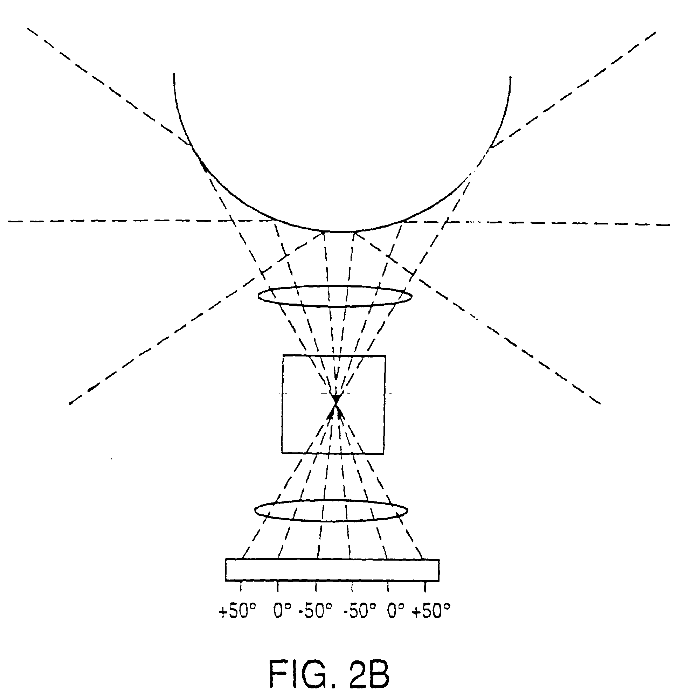

In a preferred embodiment, the convex mirror 210 is a parabolic mirror that creates an annular image wherein the radial distance from the center of the annual image is linearly proportional to the angle of incident light. A panoramic camera system with a parabolic mirror is illustrated in **Figure 2b.** Note that in the image plane of **Figure 2b,** the distance from the center is linearly proportional to the angle of incident light. This concept is more clearly illustrated in **Figure 3c,** wherein the concentric circles represent different angles of incident light.

### The Astigmatism Correction Lens

The convex mirror of the present invention introduces other image defects that require careful correction. One particular problem is astigmatism. Specifically, the light reflected downward from the convex mirror **210** of the present invention will not meet at a single focal point. To correct for this problem, an astigmatism correction lens **220** is added to correctly focus the light from the convex mirror **210.**

The astigmatism correction lens **220** comprises a group of 2 or more lenses whose group focal length is long but with individual elements of strong and opposite power. Thus, the astigmatism lens group may be made of the same optical material without introducing significant lateral color. Since the beam size associated with any object point in space to be imaged is quite small compared to the field of the beam, the strong elements tend to introduce deleterious amounts of spherical aberration or coma into the final image.

### The Objective Lens

The next component is a standard camera objective lens **230.** The standard camera objective lens **230** forms an image using the astigmatism-corrected, reflected light from the convex mirror **210.** In the present embodiment, a standard off-the-shelf camera lenses, that are optimized for cost and performance in the conventional photography market. The current embodiment relies upon a predefined focal length.

The focal length of the standard objective lens is selected based on two factors. The first factor is the maximum angular field of view present by the convex mirror and astigmatism correction lens group. This factor is determined by the largest angle away from the horizon of an object to be captured. The second factor is the maximum diameter of the circular image to be recorded. In an embodiment that uses 35mm film, this value would not exceed 24mm. In an embodiment that uses Charged Coupled Device arrays, the objective lens must keep the circular image within the bounds of the CCD array.

For one preferred embodiment, the appropriate focal length is 22 mm. Since there are many objective lenses available with focal lengths in the 18 mm to 24mm range, this focal length provides many off-the-shelf lens choices.

To allow a standard off-the-shelf camera lens to be used, the present invention "false focuses" the image beyond the normal focal plane. This allows the next optical element (field flattening lens) to fit between the objective lens **230** and the image plane.

### The Field Flattening Lens

Another optical problem created by the parabolic mirror is a curved image field that is created by the curve of the parabolic mirror. The curved image field problem is solved by add yet another lens **240**. This final lens is a "field flattening" lens, that flattens the field of optimal focus to a flat two dimensional image plane. The field flattening lens **240** must be kept as close to the image plane as practical to eliminate the need for a focal plane shutter.

In one embodiment, the material SFL6 is used to create the field flattening lens **240.** Due to its high index of refraction, SFL6 allows the field flattening lens **240** to be approximately 2 millimeters thick. If the field flattening lens **240** was created using more traditional materials, the field flattening lens **240** would be approximately 4.5 millimeters thick.

### The Image Capture System

The final major component of the panoramic camera design is the image capture mechanism **250.** The image capture mechanism **250** is placed at the image plane just beneath the field flattening lens **240.** This mechanism captures the optimized two dimensional annular image of the surrounding panorama. An example of a captured panorama stored as a two dimensional annular representation is shown in **Figure 3a**.

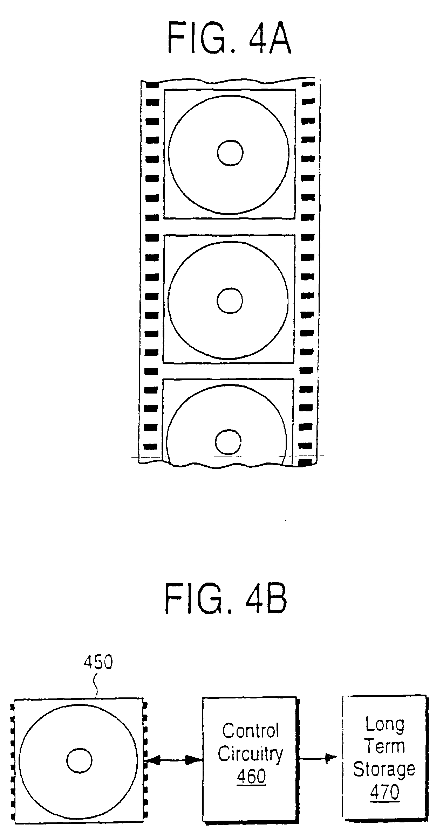

In one embodiment of the present invention, the image capture mechanism can be a frame of photographic film as illustrated in **Figure 4a.** Using convention photography techniques, several successive frames can be used to record series of images. The series of images may be several distinct still images taken from different locations. Alternatively, the series of images may be a set of successive images recorded used to create a panoramic motion picture. The image that is recorded onto photographic film is then later converted into a digital image for digital image processing as will be described in later sections of this document.

In the preferred embodiment of the present invention, a high resolution digital image capture system is used to capture the annular image created by the optical elements. In one embodiment of the present invention a Charged Coupled Device (CCD) array **450** is placed in the image plane to capture the image as illustrated in **Figure 4b.** Control circuitry **460** coupled to the CCD array **450** captures the image directly into a digital format. The use of a digital image capture system allows an immediate read-out of the digitized raw annular image. The digitized raw annular image can be stored into a storage device **470** such as flash memory or a hard disk drive. The CCD array **450** may be color (RGB) or black & white, depending on the intended application.

To generate an annular image of sufficient quality to be used in the Apple QuickTime® VR market, it has been determined that the image plane must be sampled with an array having at least 2K by 2K elements. To meet this requirement, one embodiment of the present invention uses a CCD array produced by Loral-Fairchild, Inc. However, the high resolution CCD array sold by Loral-Fairchild, Inc. adds a significant cost to the panoramic camera of the present invention. Furthermore, large CCD arrays such as the Loral-Fairchild array have difficulty handling the extreme differences in light intensity that are produced optical system of the present invention. Specifically, one area of the image may have direct sunlight and other areas may receive comparatively little light.

To reduce the production cost of the panoramic camera, alternate embodiments of the present invention use a set of lower resolution CCD arrays. Specifically, consumer grade CCD devices that are targeted at the consumer electronics market are used. Consumer electronics grade CCD arrays have the distinct advantages of lower cost, more highly-integrated support circuitry availability, high speed read-out, robustness to extreme lighting and other environmental conditions.

No individual consumer grade CCD array meets the high resolution requirements needed by the present invention (at least 2K by 2K elements). Therefore, a method of obtaining a greater image resolution is required if consumer grade CCDs are used.

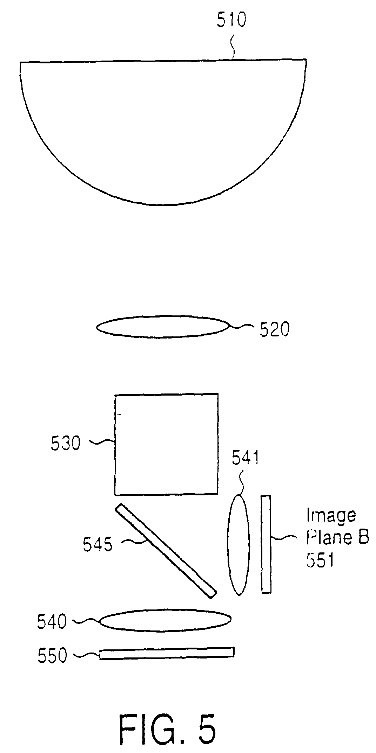

One method of creating an acceptable image capture mechanism using consumer grade CCD arrays is to use multiple low resolution CCD chips to cover the image plane using a mosaic pattern. Referring to **Figure 5,** the basic panoramic camera configuration described in the previous sections is illustrated except the last stage has an added beam-splitter **545** that directs a second image to a second field flattening lens **541** and a second image plane **551.** The beam-splitter **545** may comprise a half-silvered mirror or a prism arrangement as is known in the art. The two image planes (image plane **551** and image plane **553**) each capture a portion of the whole annular image. To construct a complete image, the camera optically composites the images from the two different image planes into a single image.

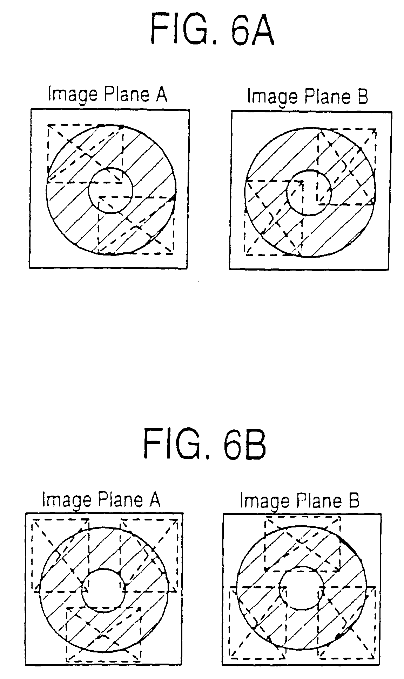

**Figure 6a** and **6b** each illustrate one possible embodiment of the dual image plane image capture system. **Figure 6a** illustrates a mosaic pattern create with four consumer grade CCD devices. As illustrated in **Figure 6a,** the two image planes capture the whole annular image while each image plane leaves room for the chip lead frames and support circuitry. **Figure 6b** illustrates an alternate embodiment that six consumer grade CCD devices. An additional advantage of this scheme is that the CCD array chips can potentially share some supporting circuitry since the signals each independent chip is requiring are often identical.

A disadvantage of the mosaic technique is the image capture variation that will exists between the different CCD chips. The image variation can be compensated for by having overlapping CCD array coverage. The overlapping area is used to cross calibrate the image variation between adjacent CCD arrays.

### Folded Optics Configuration

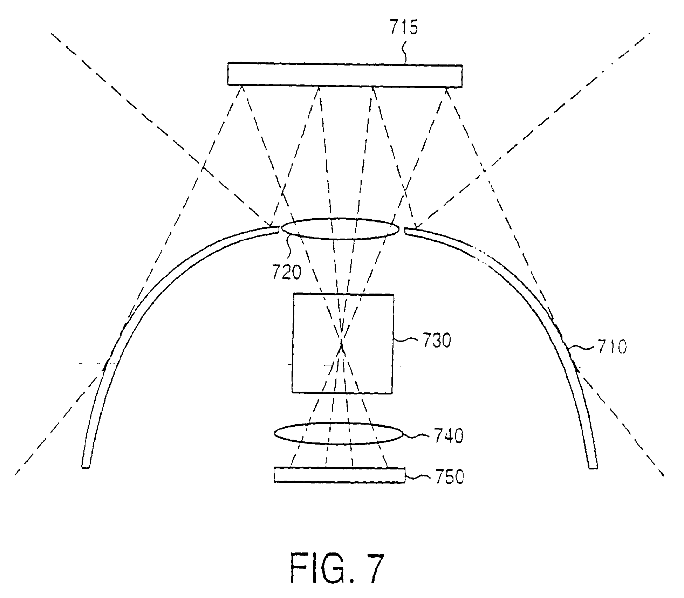

**Figure 7** illustrates an alternative embodiment of the panoramic camera system. In the embodiment of **Figure 7,** the camera subassembly is housed within the parabolic mirror. Referring to **Figure 7,** the convex mirror **710** is inverted and a hole is cut into the tip. A second mirror **715** is placed above the convex mirror **710,** directing the light from the surrounding panorama into the hole in the top of the convex mirror **710.** The remainder of the optical path, including the astigmatism correction lens **720,** the objective lens **730,** the field flattening lens **740,** and the image capture mechanism **750,** are all housed inside the inverted convex mirror **710.** It is apparent from the diagram of **Figure 7** that the "folded optics" configuration protects the optical path and mechanical parts of the panoramic camera system.

### Transparent Block Configuration

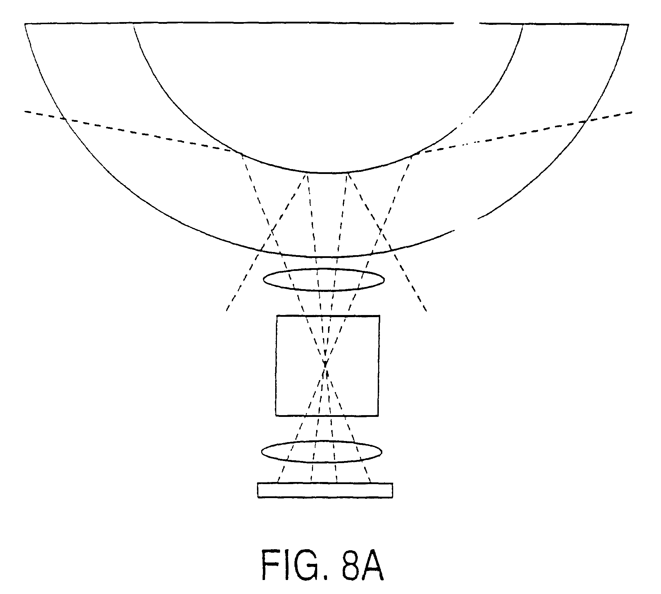

Another alternative embodiment is shown in **Figure 8a.** In this alternative, the convex mirror is formed as the internal space of a curved block of transparent material such as glass or plastic. The mirror surface **810** is formed by the inner surface of hole that is milled or cast in the top of the transparent material **805**. The shape of the outer surface approximates a sphere centered on the virtual focal point of the convex mirror **810.** The outer surface of the transparent material is a polished surface that forms the outside skin of the camera. The bottom tip of the transparent block is optically mated to the other optical parts of the camera system. The bottom tip may be polished flat or molded into a shape that contributes to the astigmatism lens group.

The solid transparent block approach has a number of significant advantages. First, the mirrored inner surface of the transparent block material can be well protected. This technique overcomes the disadvantages of front surface mirrors. Specifically, when front surface mirrors are exposed to the outside world they are susceptible to damage and degradation. In the above described embodiment, the mirrored surface is fully protected since it is encased between a protective backing material and the transparent block material. Another advantage of the solid block approach is that the skin of the camera is incorporate into the optical system. Thus only one surface would need to be multicoated to prevent internal reflections.

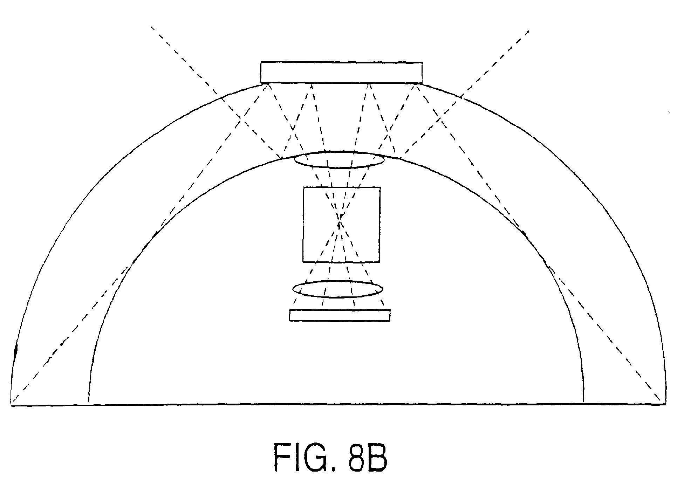

The transparent block technique can also be implement using the folded optics scheme described in the previous section. Specifically, Figure 8b illustrates an inverted solid transparent block used to implement a panoramic camera system. In this case, the camera components are contained within the mirror cavity. Note that the outside surface at the top of the block is no longer an exit path bus is instead a mirrored surface that directs the image light down into an optical path inside the parabolic block.

Different methods can be used to construct a transparent block panoramic camera system. One method would be to create the transparent block, then polish the transparent block, and finally add a mirrored surface where appropriate. An alternate method of constructing a transparent block panoramic camera system would start with the convex mirror. Then, the convex mirror would be encapsulated within the transparent block. This method would be simpler to construct since a concave surface would not require polishing. Furthermore, the convex mirror would be protected by the transparent block.

### Center Support Configuration

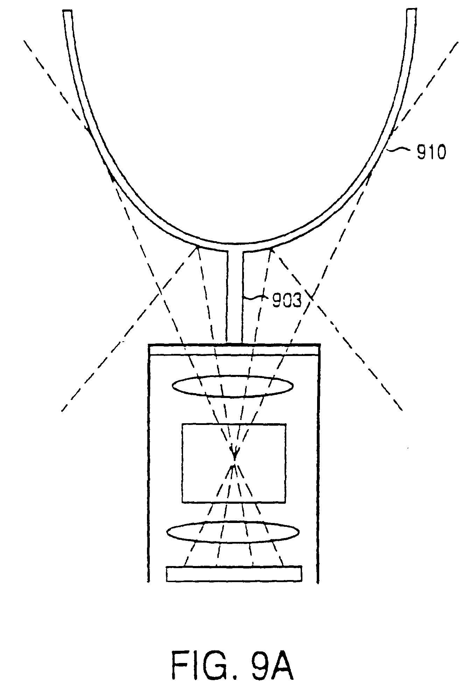

Another alternative embodiment addresses the problem of how to align and support the optical elements of the panoramic camera illustrated in **Figure 2a.** It is possible to use the protective, transparent block technique as described in the previous section to provide structure, stability and alignment. However, the transparent block technique requires multicoating of the surfaces or else undesired internal reflections will be visible. **Figure 9a** discloses an alternate embodiment wherein a central post **903** is used to support the parabolic mirror **910.** The remainder of the optical system is below the parabolic mirror **910** and the central post **903.** The center support scheme takes advantage of the fact that the center of the annular image is discarded since it contains only an image of the camera itself. Therefore, the center portion of the annular image can be used for support of the parabolic mirror **910.**

### External Support Configuration

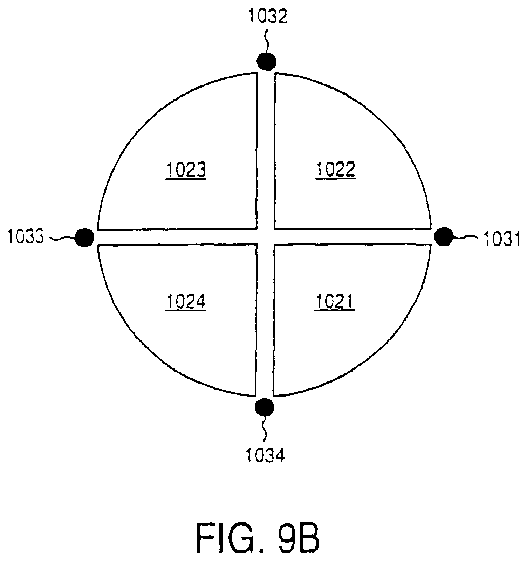

Another scheme for supporting the parabolic mirror above the optical elements below is to use several side supports. This can be accomplished by splitting the parabolic mirror into "pie-pieces" by cutting the parabolic mirror after fabrication. For example, the parabolic mirror can be quartered as illustrated in **Figure 9b.** The four sections of parabolic mirror **1021, 1022, 1023,** and **1024** can be spread apart slightly, allowing for the introduction of supporting elements **1031, 1032, 1033,** and **1034** that will not obstruct the fields of view.

If the parabolic mirror is split into four sections, then annular image will appear as four quadrants at the image plane. To correct for this, the gaps can be removed during the polar-to-rectangular coordinate conversion, thereby restoring the continuity of the panoramic image. The gaps between the mirror sections should be kept as small as possible, however, since the optical system is degraded by the loss of rotational symmetry.

### Panoramic Image Presentation

As illustrated in **Figure 3a,** the panoramic camera system of the present invention records a two dimensional annular representation of the surrounding panorama. However, the annular representation is not of much interest to most viewers. Therefore, to display the panoramic images captured by the panoramic camera of the present invention, several different display systems are disclosed.

### Still image presentation as a rectangular panoramic image

The most common method of displaying a panoramic image is to display the image as a rectangle where the horizontal direction represents the view angle. An example of this type of panoramic image presentation is illustrated in **Figure 3b.** Such rectangular panoramic images are commonly displayed in nature magazines. As stated in the background, the prior art method of creating such rectangular panoramic images was to take several convention photographs at different angles and then stitch those photographs together somehow.

With the panoramic camera system of the present invention, such rectangular panoramic images can easily be created. First the panoramic camera system of the present invention is used to capture an annular image of the surrounding panorama. Then the annular image is digitized and loaded into a computer system. (The image will already be in digital form if a CCD version of the panoramic camera system was used to capture the image.)

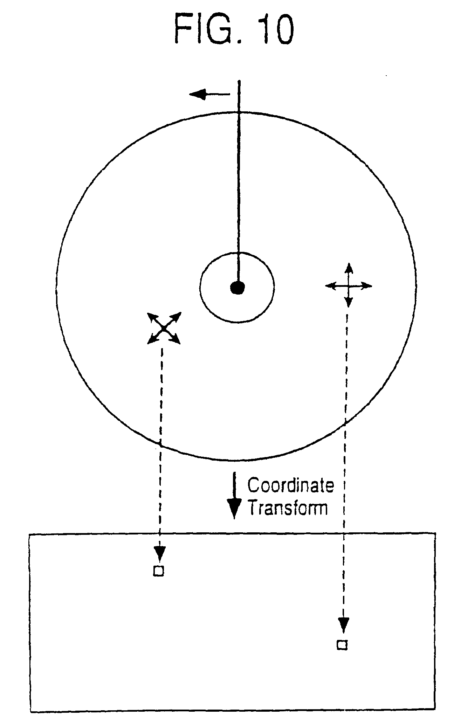

A custom conversion program is then executed on the computer system. The custom conversion program scans around the annular image starting at an arbitrarily chosen sampling line **310.** Points along the sampling line **310** are sampled and then their position changed using polar coordinate to rectangular coordinate conversion. **Figure 10** illustrates how two different points on the annular image are sampled and then placed into rectangular coordinates. As illustrated in **Figure 10,** the orientation of the sampling pattern changes as the coordinate transform program rotates around the annular image. The resulting rectangular image is illustrated in **Figure 3b.**

While sampling the annular image, it is important to sample the image differently depending on where the annular image is being sampled. The following three rules must be observed:
1. The sampling shape is dynamically changing depending on the viewing angle (both in the horizontal and vertical).
2. The sampling shape size proportional to the radius (vertical viewing angle); and
3. The sampling shape orientation is different depending on the horizontal viewing angle.

Since there is a greater resolution around the outer perimeter of the annular image, the corresponding rectangular image portion will have better image clarity. The outer perimeter of the annular image may be the top or the bottom of the rectangular image depending on the optical path. (Compare **Figure 2a** with **Figure 7**). In **Figure 10,** the lower portion of the rectangular image will have a better image clarity since the it is from the outer perimeter of the annular image. One embodiment of the present invention takes advantage of this fact by using the outer perimeter of the annular image for the ground since the ground in a panoramic scene is generally more detailed than the sky.

Once the panoramic image has been converted from an annular image to a rectangular image on a computer system, then the rectangular image can be presented to viewers in a number of different formats. For example, the rectangular image may be distributed electronically as a JPEG image and viewed with JPEG image viewers. Alternatively, the rectangular image can be printed out with a color printer. It should be noted that since the rectangular image is in digital form, it can quickly be added to a publication being created with a Desktop Publishing Layout Program such QuarkXpress or Adobe's PageMaker.

### Image presentation as a Virtual Reality image

Apple Computer introduced a standard known as QuickTime® VR for storing and displaying virtual reality images. Apple Computer's QuickTime® VR standard governs the data storage format and the playback software needed to view the QuickTime® VR datasets. The camera system of the present invention can be used to quickly create Quick Time® VR datasets.

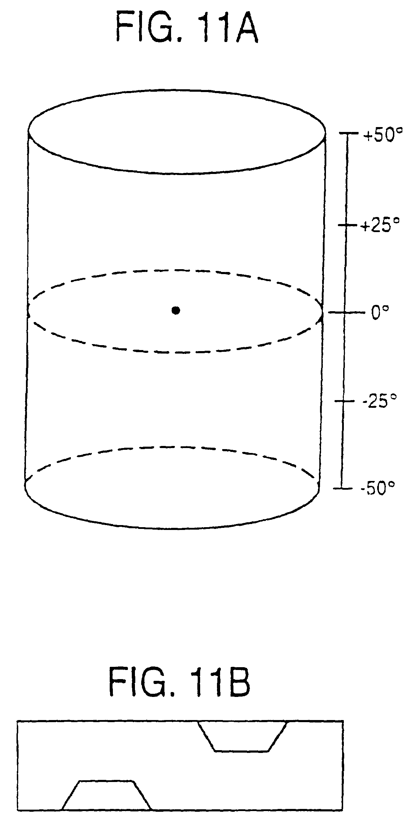

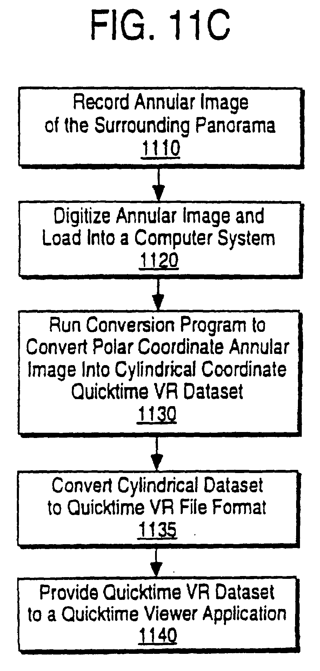

The QuickTime® VR format stores the image as cylindrical image as illustrated in **Figure 11a.** Specifically, the viewpoint is at the center of the cylinder and the inner surface of the cylinder represents the stored QuickTime® VR image. Note that trapezoid shaped patches must be sampled to generate an image if the user is looking up or down as illustrated in **Figure 11b.**

**Figure 11c** illustrates a flow diagram that lists the steps required to produce a QuickTime® VR dataset using the panoramic camera system of the present invention. First, at **step 1110,** a panoramic image is recorded with the panoramic camera. Then, at **step 1120,** the recorded image is digitized and loaded into a computer system. If the panoramic camera recorded the image on a piece of film, then a print of the film can be scanned into the computer system using a flatbed scanner. Alternatively, a film image can be commercially transformed into the well known PhotoCD® format produced by Kodak®. If the panoramic camera recorded the image with a CCD array and stored the image digitally, then the digital image is just copied from the camera's storage system into the computer system 's storage system.

After the digital version of the annular image is available on the computer system, a transformation program is then executed on the computer system at **step 1130** in order to transform the digitized annular image into a QuickTime® VR dataset. The annular image produced by the camera system of the present invention stores the panoramic image information in a polar coordinate system. Conversely, Apple®'s QuickTime® VR uses a cylindrical coordinate system as illustrated in **Figure 11a.** Thus, the transformation program converts the annular image from its polar coordinate system into the QuickTime® VR cylindrical coordinate system. After transforming the image into the QuickTime® VR cylindrical coordinate system, then a file is created using the QuickTime® VR file format at step **1135.**

Once the coordinate transform is complete, the transformed image can be view using Apple's QTVR player program as stated in step **1140.**

### Still image presentation on a computer network

Since the present invention can store the annular image in digital form, a very useful method of distributing panoramic images is through a computer network. In particular, the hypertext transport protocol (http) of the World Wide Web (WWW) on the Internet can be used to distribute still annular images. The still annular images would be stored on a World Wide Web server. To access the still annular images, any user coupled to the Internet would used a World Wide Web browser program.

One method of transporting the images would be to define a new panoramic image annular data format. The images could then be downloaded as stored in the panoramic image annular data format. A helper application would then display the images once downloaded.

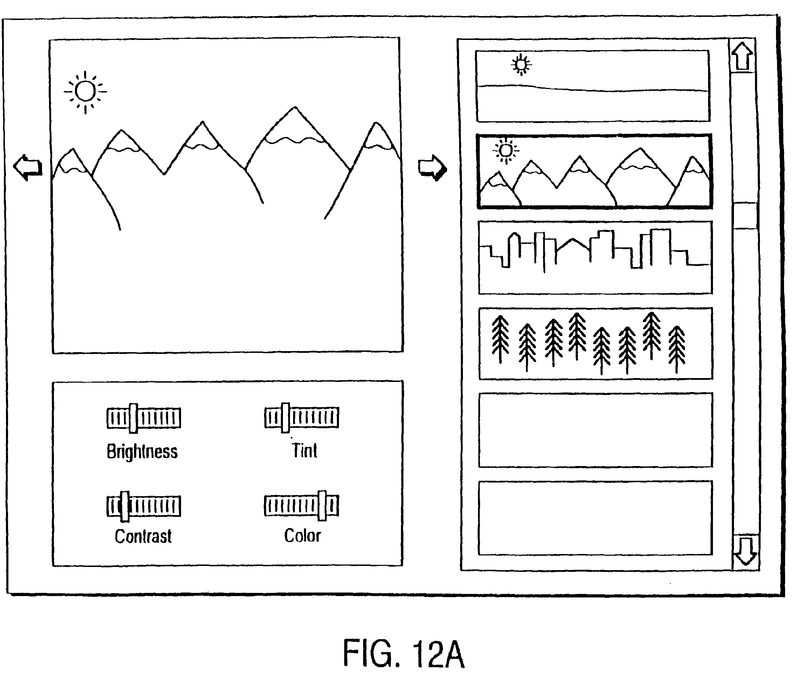

A better method of displaying images using the hypertext transport protocol (http) of the World Wide Web (WWW) would be to implement a "plug-in" application that would work with the browser program. **Figure 12** illustrates a graphical user interface for one possible client panoramic image presentations system. On the right side of **Figure 12,** a set of different panoramic images to display is available, To display one of those images, the user selects the image with a cursor control device. On the upper left of the graphical user interface of **Figure 12** is viewport for displaying a portion of a panoramic image. Pan arrows on either side of the viewport allow the user to pan left and right.

### Image Presentation As Video

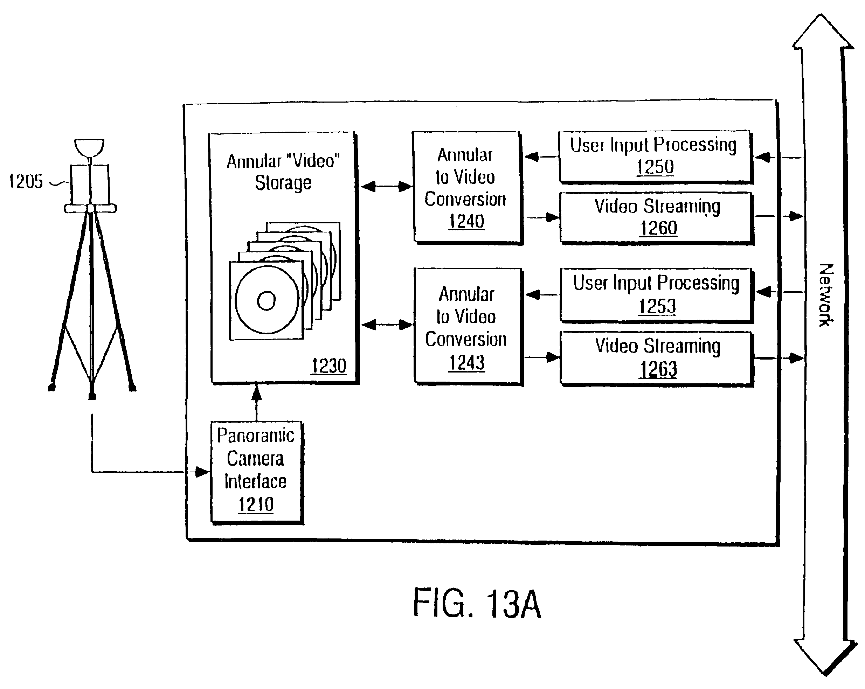

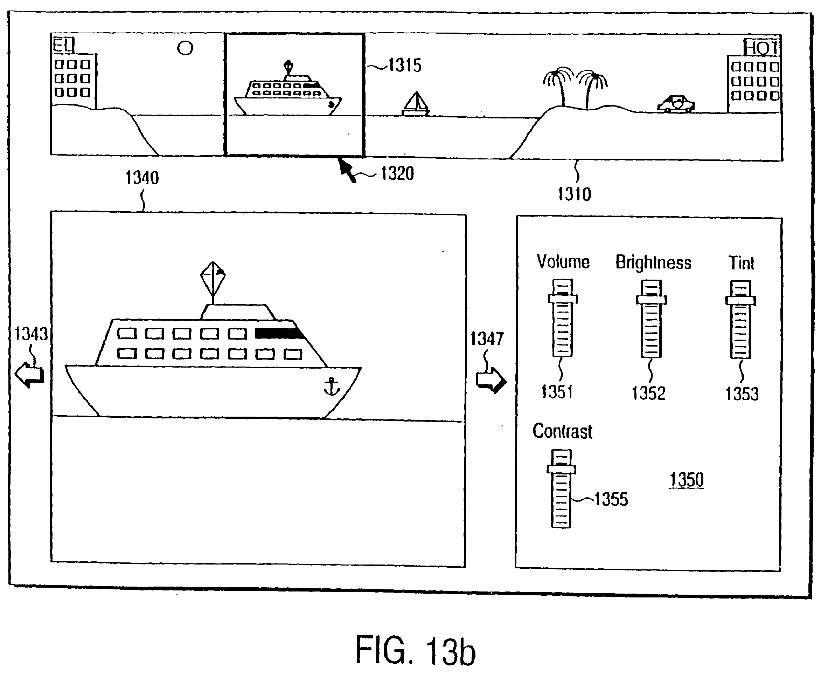

One of the most interesting presentation systems for the present invention is a video presentation system. **Figures 13a** and **13b** illustrate one possible video presentation system,

Referring to **Figure 13a,** a CCD version of the panoramic camera system **1205** of the present invention is illustrated coupled to a computer system **1200.** The CCD version of the panoramic camera system **1205** is coupled through a panoramic camera interface **1210.** The panoramic camera interface **1210** receives a digital stream of annular images. To interface with computer systems, one embodiment of the panoramic camera interface **1210 is** the FireWire system that is described in the IEEE 1394 standard.

After being received through the panoramic camera interface **1210,** the digitized annular images are stored in an Annular "Video" Storage system **1230.** The Annular "Video" comprises a series of a consecutive annular images taken with a CCD version of the panoramic camera system **1205**.

To display the Annular Video as normal video, the annular frames must be converted from the annular image format into normal video images. In one embodiment of the present invention, only a portion of the annular image is converted into normal video. One reason for this is that the aspect ratio of video does not allow for good viewing of wide but short rectangular panoramic images. Furthermore, by only transforming a portion of the annular image into normal video, the transformation can be done in real-time without requiring exceedingly fast computer equipment. The transformation of annular video to normal video is done by annular to video conversion units **1240** and **1243.**

To display the normal video, existing video streaming software **1260** and **1263** can be used. For example, using a standard transmission protocol like MPEG or a proprietary protocols such as StreamWorks produced by Xing Technology Corporation of Arroyo Grande, California or VDOLive produced by VDOnet Corporation of Santa Clara, California, the video can be provided to computer users coupled to a network.

**Figure 13b** illustrates one possible embodiment of a graphical user interface (GUI) for accessing the annular video. In the GUI of **Figure 13b,** a video viewport **1340** is used to display the video. A smaller still panoramic image **1310** is used to illustrate a static version of the full panoramic video. A locator window **1315** is used to identify the view angle that the video window **1340** is displaying within the full panoramic view that is available.

To change the view angle, the user can select a pan right arrow **1347** or a pan left arrow **1343** with a cursor **1320,** Alternatively, the user can simply move the position of the locator window **1315** within the still panoramic image **1310.** In the embodiment of **Figure 13b,** the entire vertical image aspect of the image is compressed into the video viewport **1340,** however in other embodiments the,

Referring back to **Figure 13a,** user input processing routines **1250** and **1253** processing the user's commands. When a the user requests a viewpoint change, the new viewpoint is communicated to the respective annular to video conversion units **1240** or **1243** such that it will begin converting images from the new user viewpoint. In an alternate embodiment, the user input processing routines are place within the client program on the client computer system. For example, in an embodiment of a WWW browser program, a plug-in program can process the user commands and simply pass the location of the video viewport to the server.

Referring back to **Figure 13b,** a parameter window **1350** is also available to the viewer. The parameter window **1350** allows the user to adjust some of the viewing parameters such as Image Brightness **1352,** Image Tint **1353** and Image Contrast **1355.** When a user adjusts these parameters, the changes will be processed by the user input processing routines **1250** and **1253** provided to the annular to video conversion units **1240** or **1243** or the video streaming software **1260** or **1263** such that video quality is changed.

### Telepresence: Video and Audio

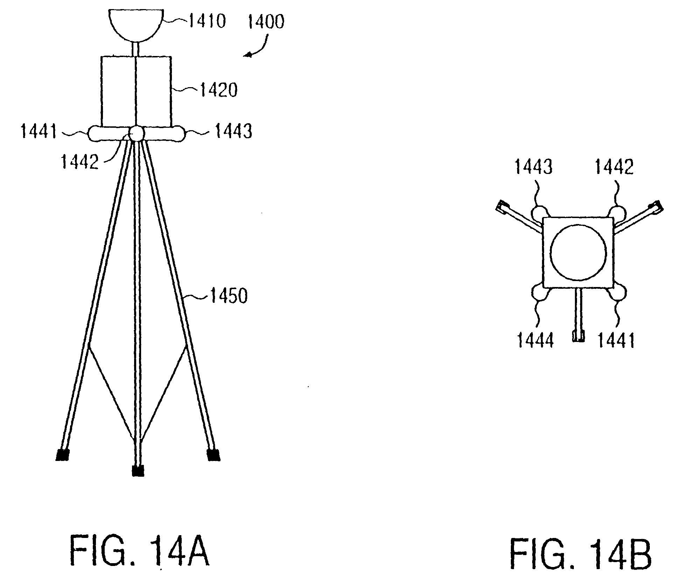

To more completely convey the experience of being at a different location, the present invention can be combined with a three dimensional sound system. Referring to **Figures 14a** and **14b,** an embodiment of the camera system is illustrated with four directional microphones **1441, 1442, 1443,** and **1444.** The four directional microphones **1441, 1442, 1443,** and **1444** capture sound emanating from four cardinal directions.

To add three dimensional sound, the sound from the various directional microphones is mixed depending on the viewing angle that a user has selected. For example, if a viewer that is seeing a real-time image from camera **1400** of **Figure 14a** is viewing straight out of the page, then the left speaker will receive information from microphone **1443** and the right speaker will receive information from microphone **1441.** The sound can be provided to users on a computer network using audio streaming software such as RealAudio by Progressive Networks, Inc. As the viewer adjusts the viewing angle, the sound from the directional microphones will be adjusted accordingly.

By adding sound to the system, the user is provided with a cues as to which direction they should be viewing. For example, if the user hears a sound from "behind", then the user can change the view angle to look backward.

The foregoing has described a camera device that captures 360 degree panoramic images and presentation systems for displaying such images. It is contemplated that changes and modifications may be made by one of ordinary skill in the art, to the materials and arrangements of elements of the present invention without departing from the scope of the invention.

## Claims

1. A method of presenting panoramic images comprising steps of:
selecting, at a local receiver, a viewing angle into a stream of digitized panoramic frames, said stream comprising a plurality of digitized panoramic frames;
transforming a selected portion of one or more of said plurality of digitized panoramic frames to generate a stream of planar projection frames, said selected portion responsive to said viewing angle; and
displaying said stream of planar projection frames at said local receiver.

2. The method of claim 1 wherein said stream of digitized panoramic frames further comprises at least one audio stream.

3. The method of claim 1 wherein said stream of digitized panoramic frames further comprises at least one audio stream and said method further comprising a step of mixing said at least one audio stream from a plurality of directional audio sources responsive to said viewing angle.

4. The method of any one of claims 1 through 3 wherein each of said plurality of digitized panoramic frames contains a portion of a digitized annular frame.

5. The method of any one of claims 1 through 4 wherein said viewing angle is one of a predetermined plurality of viewing angles and said selected portion is one of a predetermined plurality of selected portions wherein each of said plurality of viewing angles is associated with one of said predetermined plurality of selected portions, wherein the step of selecting further includes steps of:
associating a plurality of channels with said plurality of selected portions; and
selecting one of said plurality of channels.

6. The method of any one of claims 1 through 5 wherein each of said plurality of digitized panoramic frames includes a two dimensional image of a projection of a three dimensional space, said three dimensional space capable of being represented by two angular coordinates and a distance coordinate, said two dimensional image comprising substantially 360° of one of said two angular coordinates and more than 10° of the other of said two angular coordinates.

7. The method of any one of claims 1 through 5 wherein each of said plurality of digitized panoramic frames includes a plurality of two dimensional images each containing a partial projection of a three dimensional space, said three dimensional space capable of being represented by two angular coordinates and a distance coordinate, wherein said plurality of two dimensional images, when combined, includes substantially 360° of one of said two angular coordinates and more than 10° of the other of said two angular coordinates.

8. The method of any one of claims 1 through 7 further comprising a step of transmitting said stream of digitized panoramic frames to said local receiver.

9. The method of any one of claims 1 through 7 further comprising a step of transmitting said selected portion of one or more of said plurality of digitized panoramic frames to said local receiver.

10. The method of any one of claims 1 through 7 further comprising a step of transmitting said stream of planar projection frames to said local receiver.

11. The method of any one of claims 1 through 10 wherein said local receiver comprises a client computer in communication with a network, and said method further includes a step of accessing said stream of digitized panoramic frames at a server computer that is also in communication with said network.

12. The method of claim 11 further comprising a step of sending, by said local receiver, said viewing angle to said server computer.

13. The method of claim 12 wherein the step of transforming is performed at said server computer.

14. The method of any one of claims 1 through 12 wherein the step of transforming is performed at said local receiver.

15. The method of any one of claims 1 through 14 further comprising a step of capturing said stream of digitized panoramic frames at a remote location.

16. The method of claim 15 further comprising a step of transmitting said stream of digitized panoramic frames from said remote location.

17. The method of any one of claims 1 through 16 wherein the step of transforming further comprises a step of controlling a viewport to select said selected portion of said one or more of said plurality of digitized panoramic frames.

18. The method of any one of claims 1 through 17 wherein said stream of digitized panoramic frames is compressed.

19. The method of any one of claims 1 through 18 wherein said stream of digitized panoramic frames is accessed from a computer readable media.

20. An apparatus for presenting panoramic images comprising:
a receiver means for receiving a stream of digitized panoramic frames, said stream comprising a plurality of digitized panoramic frames;
a selection means for selecting a viewing angle into said stream of digitized panoramic frames received by the receiver means;
a transformation means for transforming a selected portion of one or more of said plurality of digitized panoramic frames to generate a stream of planar projection frames, said selected portion responsive to said viewing angle selected by the selection means; and
a display means for displaying said stream of planar projection frames transformed by the transformation means.

21. The apparatus of claim 20 wherein said stream of digitized panoramic frames further comprises at least one audio stream.

22. The apparatus of claim 20 wherein said stream of digitized panoramic frames further comprises at least one audio stream and said apparatus further comprises an audio mixer means for mixing said at least one audio stream from a plurality of directional audio sources responsive to said viewing angle.

23. The apparatus of any one of claims 20 through 22 wherein each of said plurality of digitized panoramic frames contains a portion of a digitized annular frame.

24. The apparatus of any one of claims 20 through 23 wherein said viewing angle is one of a predetermined plurality of viewing angles and said selected portion is one of a predetermined plurality of selected portions wherein each of said plurality of viewing angles is associated with one of said predetermined plurality of selected portions, wherein the selection means further includes:
a means for associating a plurality of channels with said plurality of selected portions; and
a means for selecting one of said plurality of channels.

25. The apparatus of any one of claims 20 through 24 wherein each of said plurality of digitized panoramic frames includes a two dimensional image of a projection of a three dimensional space, said three dimensional space capable of being represented by two angular coordinates and a distance coordinate, said two dimensional image comprising substantially 360° of one of said two angular coordinates and more than 10° of the other of said two angular coordinates.

26. The apparatus of any one of claims 20 through 24 wherein each of said plurality of digitized panoramic frames includes a plurality of two dimensional images each containing a partial projection of a three dimensional space, said three dimensional space capable of being represented by two angular coordinates and a distance coordinate, wherein said plurality of two dimensional images, when combined, includes substantially 360° of one of said two angular coordinates and more than 10° of the other of said two angular coordinates.

27. The apparatus of any one of claims 20 through 26 further comprising a means for transmitting said stream of digitized panoramic frames to said local receiver.

28. The apparatus of any one of claims 20 through 26 further comprising a means for transmitting said selected portion of one or more of said plurality of digitized panoramic frames to said local receiver.

29. The apparatus of any one of claims 20 through 26 further comprising a means for transmitting said stream of planar projection frames to said local receiver.

30. The apparatus of any one of claims 20 through 29 wherein said local receiver comprises a client computer in communication with a network, and said apparatus further includes a means for accessing said stream of digitized panoramic frames at a server computer that is also in communication with said network.

31. The apparatus of claim 30 further comprising a means for sending, by said local receiver, said viewing angle to said server computer.

32. The apparatus of claim 31 wherein the transforming means is at said server computer.

33. The apparatus of any one of claims 20 through 31 wherein the transforming means is at said local receiver.

34. The apparatus of any one of claims 20 through 33 further comprising a means for capturing said stream of digitized panoramic frames at a remote location.

35. The apparatus of claim 34 further comprising a means for transmitting said stream of digitized panoramic frames from said remote location.

36. The apparatus of any one of claims 20 through 35 wherein the means for transforming further comprises a means for controlling a viewport to select said selected portion of said one or more of said plurality of digitized panoramic frames.

37. The apparatus of any one of claims 20 through 36 wherein said stream of digitized panoramic frames is compressed.

38. The apparatus of any one of claims 20 through 37 wherein said stream of digitized panoramic frames is accessed from a computer readable media.

39. An apparatus for presenting panoramic images comprising:
a receiver mechanism configured to receive a stream of digitized panoramic frames, said stream including a plurality of digitized panoramic frames;
a selection mechanism configured to select a viewing angle into said stream of digitized panoramic frames;
a transformation mechanism configured to transform a selected portion of one or more of said plurality of digitized panoramic frames to generate a stream of planar projection frames, said selected portion responsive to said viewing angle selected by the selection mechanism; and
a display mechanism configured to display said stream of planar projection frames transformed by the transformation mechanism.

40. A program product comprising:
a computer usable data carrier having computer readable code embodied therein for causing a computer to present a panoramic images, said computer readable code comprising:
computer readable program code configured to cause said computer to effect a receiver means for receiving a stream of digitized panoramic frames, said stream comprising a plurality of digitized panoramic frames;
computer readable program code configured to cause said computer to effect a selection means for selecting a viewing angle into said stream of digitized panoramic frames received by the receiver means;
computer readable program code configured to cause said computer to effect a transformation means for transforming a selected portion of one or more of said plurality of digitized panoramic frames to generate a stream of planar projection frames, said selected portion responsive to said viewing angle selected by the selection means; and
computer readable program code configured to cause said computer to effect a display means for displaying said stream of planar projection frames transformed by the transformation means.

41. The program product of claim 40 wherein said stream of digitized panoramic frames further comprises at least one audio stream.

42. The program product of claim 40 wherein said stream of digitized panoramic frames further comprises at least one audio stream and said program product further comprises computer readable program code configured to cause said computer to effect an audio mixer means for mixing said at least one audio stream from a plurality of directional audio sources responsive to said viewing angle.

43. The program product of any one of claims 40 through 42 wherein each of said plurality of digitized panoramic frames contains a portion of a digitized annular frame.

44. The program product of any one of claims 40 through 43 wherein said viewing angle is one of a predetermined plurality of viewing angles and said selected portion is one of a predetermined plurality of selected portions wherein each of said plurality of viewing angles is associated with one of said predetermined plurality of selected portions, wherein the selection means further includes:
computer readable program code configured to cause said computer to effect a means for associating a plurality of channels with said plurality of selected portions; and
computer readable program code configured to cause said computer to effect a means for selecting one of said plurality of channels.

45. The program product of any one of claims 40 through 44 wherein each of said plurality of digitized panoramic frames includes a two dimensional image of a projection of a three dimensional space, said three dimensional space capable of being represented by two angular coordinates and a distance coordinate, said two dimensional image comprising substantially 360° of one of said two angular coordinates and more than 10° of the other of said two angular coordinates.

46. The program product of any one of claims 40 through 44 wherein each of said plurality of digitized panoramic frames includes a plurality of two dimensional images each containing a partial projection of a three dimensional space, said three dimensional space capable of being represented by two angular coordinates and a distance coordinate, wherein said plurality of two dimensional images, when combined, includes substantially 360° of one of said two angular coordinates and more than 10° of the other of said two angular coordinates.

47. The program product of any one of claims 40 through 46 further comprising computer readable program code configured to cause said computer to effect a means for transmitting said stream of digitized panoramic frames to said local receiver.

48. The program product of any one of claims 40 through 46 further comprising computer readable program code configured to cause said computer to effect a means for transmitting said selected portion of one or more of said plurality of digitized panoramic frames to said local receiver.

49. The program product of any one of claims 40 through 46 further comprising computer readable program code configured to cause said computer to effect a means for transmitting said stream of planar projection frames to said local receiver.

50. The program product of any one of claims 40 through 49 wherein said local receiver comprises a client computer in communication with a network, and said program product further includes computer readable program code configured to cause said computer to effect a means for accessing said stream of digitized panoramic frames at a server computer that is also in communication with said network.

51. The program product of claim 50 further comprising computer readable program code configured to cause said computer to effect a means for sending, by said local receiver, said viewing angle to said server computer.

52. The program product of claim 51 wherein the transforming means is at said server computer.

53. The program product of any one of claims 40 through 51 wherein the transforming means is at said local receiver.

54. The program product of any one of claims 40 through 53 further comprising computer readable program code configured to cause said computer to effect a means for capturing said stream of digitized panoramic frames at a remote location.

55. The program product of claim 54 further comprising computer readable program code configured to cause said computer to effect a means for transmitting said stream of digitized panoramic frames from said remote location.

56. The program product of any one of claims 40 through 55 wherein the means for transforming further comprises computer readable program code configured to cause said computer to effect a means for controlling a viewport to select said selected portion of said one or more of said plurality of digitized panoramic frames.

57. The program product of any one of claims 40 through 56 wherein said stream of digitized panoramic frames is compressed.

58. The program product of any one of claims 40 through 57 wherein said stream of digitized panoramic frames is accessed from a computer readable media.

59. The computer program product of claims 40 through 59 wherein the computer usable data carrier is a computer readable media.

60. The computer program product of claims 40 through 60 wherein the computer usable data carrier is a carrier wave.
